# EUROPEAN PATENT SPECIFICATION

(11) **EP 2 551 089 B1**
(45) Date of publication and mention of the grant of the patent: **18.06.2014**
(21) Application number: 12177522.5
(22) Date of filing: 23.07.2012
(51) Int. Cl.: B29C 49/64, B29C 49/58

(54) **Apparatus and method for manufacturing convex goblets**
Vorrichtung und Verfahren zur Herstellung konvexer Kelche
Appareil et procédé de fabrication de gobelets convexes

(30) Priority: 28.07.2011 IT PD20110255
(43) Date of publication of application: 30.01.2013
(73) Proprietor: RDS Moulding Technology S.P.A. Con Sigla "RDS S.P.A.", 35038 Torreglia (PD) (IT)
(72) Inventor: Salata, Roberto, 35038 TORREGLIA PD (IT)
(74) Representative: Modiano, Micaela Nadia

(56) References cited:
- WO-A2-2006/050370
- DE-A1-102004 052 360
- US-A- 3 032 823
- US-A1- 2002 104 819
- DATABASE WPI Week 201155 Thomson Scientific, London, GB; AN 2011-H53162 XP002673572, -& CN 102 069 591 A (LIN C) 25 May 2011 (2011-05-25)
- DATABASE WPI Week 197934 Thomson Scientific, London, GB; AN 1979-62055B XP002673573, -& JP 54 086560 A (MITSUBISHI PLASTICS IND LTD) 10 July 1979 (1979-07-10)

## Description

The present invention relates to an apparatus and a method for making convex goblets and to a goblet made with the apparatus and the method.

Various methods for the production of goblets made of thermoplastic material are known; one of them provides for the injection of a predefined quantity of thermoplastic material in molds that reproduce the shape of the goblet to be reproduced.

Once injection has been completed, for extraction of the male plug from the cavity of the goblet said cavity must have no internal undercuts, limiting this method to goblets having a bowl with a cross-section that is constant or at the most tapered in the direction of the stem.

Moreover, in order to give the bowl its convexity, it is known to use molds that reproduce the convex outer shape of the bowl but have male plugs with a substantially constant circular cross-section, again so as to allow their extraction. However, with this type of mold it is not possible to obtain a bowl that has a low and substantially constant thickness and therefore complies with the esthetics of glass bowls or the lightness that characterizes plastic bowls.

Various methods for achieving these requirements are currently known and are aimed at modifying the crude shape of a bowl obtained by injection molding.

One of these methods consists in subjecting the bowl, obtained from injection molding, to softening and subsequent mechanical deformation.

However, this method can be applied only for bowl shapes that can withstand the mechanical deformation,

Document CN 102069591 A discloses a process for molding a goblet, and document DE 102004052360 A1, a method for making a container by blow molding.

The aim of the present invention is to propose an apparatus and a method for providing convex goblets made of thermoplastic material and having a substantially uniform low thickness, by modifying the shape of a bowl obtained by injection molding.

Within this aim, an object of the invention is to propose a convex goblet made of thermoplastic material obtained with an apparatus and a method that have relatively low costs.

This aim and these and other objects that will become better apparent hereinafter are achieved by an apparatus for making goblets made of thermoplastic material starting from a goblet-like blank obtained by molding with said thermoplastic material, **characterized in that** it comprises:
- a first station, which is constituted by an oven for heating a blank that has a mouth with a rim, said oven being provided with cooling means that, in use, are arranged at the mouth of said blank,
- a second station, constituted by a mold that comprises two first parts, which have two complementary impressions that reproduce the final shape of the goblet and a third part constituted by a solid body supported on a footing of said second station, said solid body having at least one portion, directed toward said two first parts, which is frustum-like, is shaped complementary to a mouth of said two first parts and defines an annular element that constitutes a resting region for the rim of said blank, said solid body being furthermore provided with an axial hole, which is centered on the mold and widens into said frustum-like portion so as to define a cavity, an elastic sealing gasket being inserted in said cavity and being deformable by penetration of an expander cone, which is centered and coupled to a cylindrical body which is perforated for the passage of blowing air, said cylindrical body being inserted in said axial hole and being connected to mechanical means for translational motion.

The above aim and objects are also achieved by a method, **characterized in that** it comprises the following steps:
- heating within said heating oven to conditions of softening of said blank with simultaneous cooling of said mouth of said blank by said blower,
- positioning said softened blank so that it rests with said rim on said annular element,
- closing said mold by moving mutually closer said two first parts and sliding said cylindrical body within said axial hole toward said footing, with penetration of said expander cone in said elastic sealing gasket until said elastic sealing gasket expands and pushes against said mouth of said blank,
- injecting air until the bowl of said blank expands onto the walls of said two complementary impressions of said two first parts of said mold,
- opening said mold and sliding of said cylindrical body in the opposite direction with respect to the preceding one, with extraction of said expander cone from said elastic sealing gasket until said mouth is freed from the thrust of said elastic sealing gasket,
- extracting said goblet from said mold.

The manufactured goblet, is characterized in that it has a low and substantially uniform thickness and a cross-section, at its mouth, that is smaller than a cross-section comprised between said mouth thereof and the bottom of its bowl.

Further characteristics and advantages of the invention will become better apparent from the description of a preferred but not exclusive embodiment of the apparatus according to the invention and of the method that uses said apparatus, illustrated by way of non-limiting example in the accompanying drawings, wherein:
Figure 1 is a view of a goblet-like blank obtained by molding with thermoplastic material;
Figure 2 is a view of a goblet obtained with the apparatus and with the method that uses said apparatus according to the invention;
Figure 3 is a view of the first station according to the invention;

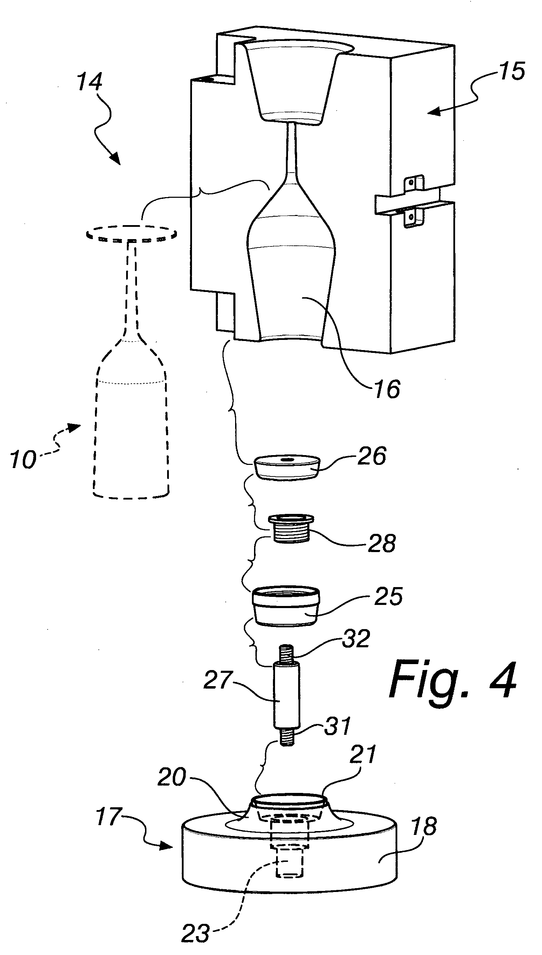

Figure 4 is an axonometric exploded view of the second mold;

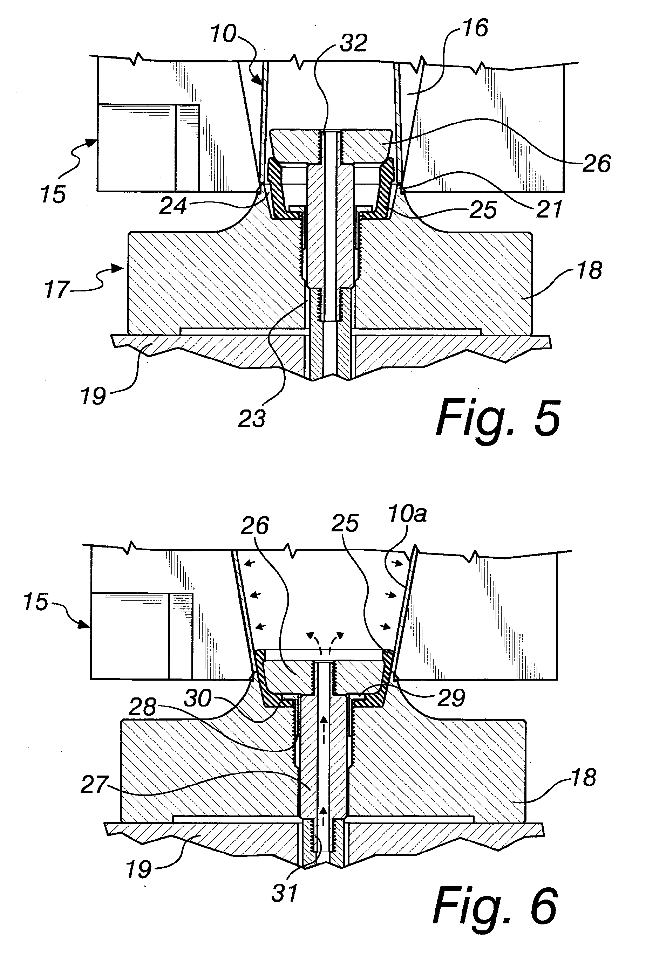

Figure 5 is an enlarged-scale sectional view of a detail of the second station according to the invention during the insertion of the crude bowl;
-- Figure 6 is an enlarged-scale view of the same detail as in Figure 5 at the end of an air injection step.

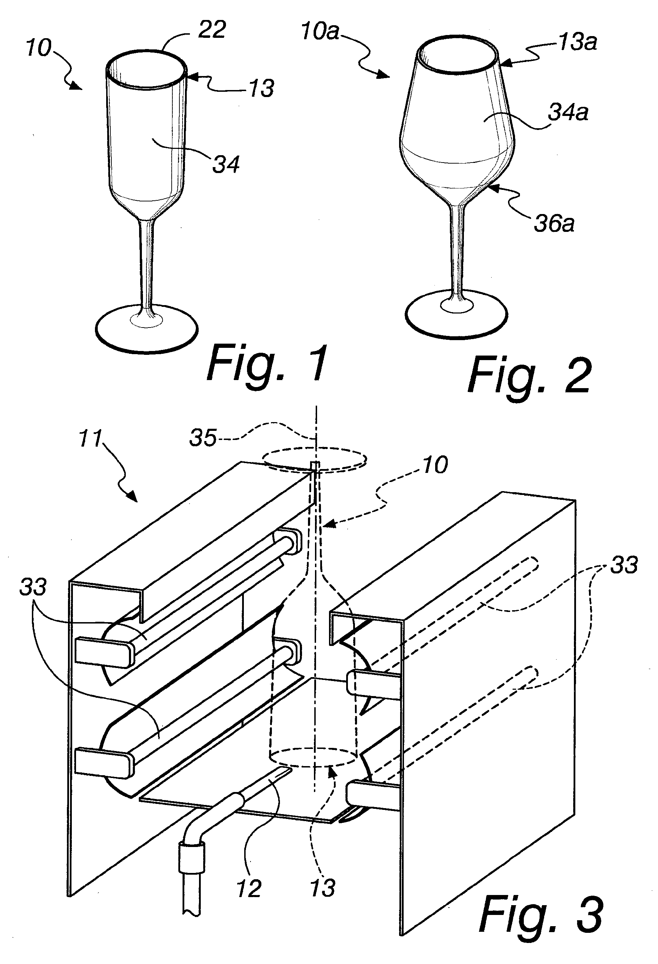

With reference to the figures, the apparatus according to the invention comprises a first station, shown in Figure 3, which is constituted by an oven 11 for heating the blank 10, which is provided with cooling means 12 at the mouth 13 of the blank 10.

Preferably, the heating oven 11 is provided with infrared heating means 33 and the cooling means 12 are constituted by an air blower.

The apparatus further comprises a second station which is constituted by a mold 14. The mold 14 comprises two first parts 15, which have two complementary impressions 16 which reproduce the final shape of the goblet 10a and a third part 17 constituted by a solid body 18 which rests on a footing 19 of the station.

The solid body 18 has at least one portion 20 that is directed toward the two first parts 15, is frustum-shaped and shaped complementary to the mouth 13 of the two first parts 15, and forms an annular element 21 that constitutes a resting region for the rim 22 of the blank 10.

Moreover, the solid body 18 is provided with an axial hole 23, which is centered on the mold 14 and widens into the frustum-like portion 20 so as to define a cavity 24, in which an elastic sealing gasket 25 is inserted, said gasket being deformable by penetration of an expander cone 26. Said cone is centered and coupled to a cylindrical body 27 at a threaded tab 32 of said cylindrical body 27.

The cylindrical body 27 is perforated for the passage of blowing air and is inserted in the axial hole 23.

Advantageously, it is further provided with a shank 31 with which a connector mates, connecting it to mechanical means for translational motion.

Conveniently, the elastic sealing gasket 25 is locked by a ring 28 which is secured onto the walls of the axial hole 23; the ring 28 has a peripheral rim 29 that closes like a vise a circular portion 30 of said elastic sealing gasket 25 against the bottom of the cavity 24.

The apparatus described above is used by a method that comprises a first step of heating the blank 10 within the heating oven 11 to softening conditions, with simultaneous cooling of the mouth 13 performed by the air blower 12.

Conveniently, the heating step occurs with simultaneous rotation of the blank 10, which faces the infrared heating means 33, about its own axis of symmetry 35.

In a second step, the softened blank 10 is positioned so as to rest with its rim 22 on the annular element 21.

A third step of the method provides for the closure of the mold 14 by means of the approach of the two first parts 15 and the sliding of the cylindrical body 27 within the axial hole 23 toward the footing 19. Thanks to this last movement, the expander cone 26, which moves integrally with the cylindrical body 27, penetrates into the elastic sealing gasket 25 until it expands it by pressing against the mouth 13 of the blank 10.

Then, in the fourth step of the method, air is injected into the bowl 34 until it expands against the walls of the two complementary impressions 16.

A fifth step of the method provides for opening the mold 14 and for the sliding of the cylindrical body 27 in the direction opposite to the preceding one in order to extract the expander cone 26 from the elastic sealing gasket 25 until the mouth 13 of the blank 10 is freed from the thrust of the elastic sealing gasket 25.

In the last step of the method, the goblet 10a is extracted from said mold 14.

The goblet 10a obtained by means of said method, which uses the apparatus described above, has a cross-section at its mouth 13a that is smaller than a cross-section comprised between said mouth 13a and the bottom 36a of its bowl 34a.

It should be noted that the movement of the cylindrical body 27 is guided by the above cited mechanical translational motion means, which can be constituted, for example, by a pneumatically actuated system.

Moreover, it should be noted that the connector coupled to the shank of the cylindrical body can be of the T-shaped type in order to allow simultaneously the connection to means for feeding the air for blowing.

It should also be noted that the cooling of the mouth of the blank, performed during the heating step, prevents overheating of the rim; in this manner, during the subsequent step the elastic sealing gasket retains the blank and deforms its mouth without leaving evident marks, as would occur instead with mechanical grip elements.

The goblet obtained by means of the above method does not require further finishing work.

In practice it has been found that the invention achieves the intended aim and objects, since it allows to provide convex goblets made of thermoplastic material with low and substantially uniform thicknesses.

Another advantage of the method according to the invention is that it does not substantially impair the quality of the injection-molded goblet.

A further advantage of the method according to the invention is that it provides a goblet that can be washed in a dishwater and therefore can be reused as well as recycled thanks to the material of which it is made.

Although the apparatus and the method according to the invention have been conceived for making convex goblets, they can be used to provide any other hollow object that is open on one side, is made of thermoplastic material and has a cross-section at the opening mouth that is smaller than a cross-section comprised between the mouth and its bottom.

The apparatus, the method and the goblet thus conceived are susceptible of numerous modifications and variations, all of which are within the scope of the appended claims; all the details may furthermore be replaced with other technically equivalent elements.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for making convex goblets made of thermoplastic material starting from a goblet-like blank (10) obtained by molding thermoplastic material, wherein the apparatus comprises:
- a first station, which is constituted by an oven (11) for heating a blank (10) that has a mouth (13) with a rim (22), **characterised in that** said oven (11) is provided with cooling means (12) that, in use, is arranged at the mouth (13) of said blank (10), and the apparatus further comprises
- a second station, constituted by a mold (14) that comprises two first parts (15), which have two complementary impressions (16) that reproduce the final shape of the goblet (10a) and a third part (17) constituted by a solid body (18) supported on a footing (19) of said second station, said solid body (18) having at least one portion (20), directed toward said two first parts (15), which is frustum-like, is shaped complementary to a mouth of said two first parts (15) and defines an annular element (21) that constitutes a resting region for the rim (22) of said blank (10), said solid body (18) being furthermore provided with an axial hole (23), which is centered on the mold (14) and widens into said frustum-like portion (20) so as to define a cavity (24), an elastic sealing gasket (25) being inserted in said cavity (24) and being deformable by penetration of an expander cone (26), which is centered and coupled to a cylindrical body (27) which is perforated for the passage of blowing air, said cylindrical body (27) being inserted in said axial hole (23) and being connected to mechanical means for translational motion.

2. The apparatus according to claim 1, **characterized in that** said elastic sealing gasket (25) is locked by a ring (28) which is secured onto the walls of said axial hole (23), said ring (28) having a peripheral rim (29) that closes like a vise a circular portion (30) of said elastic sealing gasket (25) against the bottom of said cavity (24).

3. The apparatus according to one or more of the preceding claims, **characterized in that** said translational motion means are associated with said cylindrical body (27) by a connector which is coupled to a shank (31) of said cylindrical body (27).

4. The apparatus according to one or more of the preceding claims, **characterized in that** said expander cone (26) is coupled to said cylindrical body (27) at a tab (32) of said cylindrical body (27).

5. The apparatus according to one or more of the preceding claims, **characterized in that** said heating oven (11) is provided with infrared heating means (33),

6. The apparatus according to claim 1, **characterized in that** said cooling means (12) are constituted by an air blower.

7. A method that uses the apparatus according to claims 1 to 6, **characterized in that** it comprises the following steps:
- heating within said heating oven (11) to conditions of softening of said blank (10) with simultaneous cooling of said mouth (13) of said blank (10) by said blower (12),
- positioning said softened blank (10) so that it rests with said rim (22) on said annular element (21),
- closing said mold (14) by moving said two first parts (15) mutually closer and sliding said cylindrical body (27) within said axial hole (23) toward said footing (19), with penetration of said expander cone (26) in said elastic sealing gasket (25) until said elastic sealing gasket (25) expands and pushes against said mouth (13) of said blank (10),
- injecting air until the bowl (34) of said blank (10) expands onto the walls of said two complementary impressions (16) of said two first parts (15) of said mold (14),
- opening said mold (14) and sliding of said cylindrical body (27) in the direction opposite to the preceding one, with extraction of said expander cone (26) from said elastic sealing gasket (25) until said mouth (23) is freed from the thrust of said elastic sealing gasket (25),
- extracting said goblet (10a) from said mold (14).

8. The method according to the preceding claim, **characterized in that** said heating step occurs with simultaneous rotation of said blank (10), which faces said infrared heating means (33), about its own axis of symmetry (35).

## Patentansprüche

1. Eine Vorrichtung zur Herstellung konvexer Kelche aus thermoplastischem Material, ausgehend von einem kelchartigen Rohling (10), der durch das Formen von thermoplastischem Material gewonnen wird, wobei die Vorrichtung Folgendes umfasst:
- eine erste Station, die aus einem Ofen (11) zum Erhitzen eines Rohlings (10) besteht, der eine Öffnung (13) mit einem Rand (22) hat, **dadurch gekennzeichnet, dass** der Ofen (11) mit einem Kühlungsmittel (12) ausgestattet ist, das im Gebrauch an der Öffnung (13) des Rohlings (10) angeordnet ist, und dass die Vorrichtung weiter Folgendes umfasst:
- eine zweite Station, bestehend aus einer Form (14), die zwei erste Teile (15) umfasst, welche zwei komplementäre Abdrücke (16) haben, die die endgültige Form des Kelchs (10a) reproduzieren, und einen dritten Teil (17), der aus einem festen Körper (18) besteht, welcher auf einem Sockel (19) der zweiten Station getragen wird, wobei der feste Körper (18) mindestens einen Teil (20) hat, den ersten zwei Teilen (15) zugewandt, welcher kegelstumpfartig ist, komplementär zu einer Öffnung der ersten zwei Teile (15) geformt ist und ein ringförmiges Element (21) bestimmt, das einen Auflagebereich für den Rand (22) des Rohlings (10) bildet, wobei der feste Körper (18) weiter mit einer Axialbohrung (23) versehen ist, die auf der Form (14) zentriert ist und sich in den kegelstumpfartigen Abschnitt (20) hinein erweitert, um einen Hohlraum (24) zu bilden, wobei eine elastische Dichtung (25) in den Hohlraum (24) eingesetzt wird und durch das Eindringen eines Spreizkeils (26) verformbar ist, der auf einem zylindrischen Körper (27) zentriert und damit gekoppelt ist, welcher für die Passage von Blasluft perforiert ist, wobei der zylindrische Körper (27) in die Axialbohrung (23) eingesetzt und zur Translationsbewegung mit mechanischen Mitteln verbunden ist.

2. Die Vorrichtung gemäß Anspruch 1, **dadurch gekennzeichnet, dass** die elastische Dichtung (25) mit einem Ring (28) blockiert wird, der an den Wänden der Axialbohrung (23) gesichert wird, wobei der Ring (28) einen peripheren Rand (29) hat, der wie ein Schraubstock einen kreisförmigen Abschnitt (30) der elastischen Dichtung (25) gegen den Boden des Hohlraums (24) verschließt.

3. Die Vorrichtung gemäß einem oder mehreren der obigen Ansprüche, **dadurch gekennzeichnet, dass** die Translationsbewegungsmittel mit dem zylindrischen Körper (27) durch ein Verbindungselement verbunden sind, das mit einem Schaft (31) des zylindrischen Körpers (27) gekoppelt ist.

4. Die Vorrichtung gemäß einem oder mehreren der obigen Ansprüche, **dadurch gekennzeichnet, dass** der Spreizkeil (26) mit dem zylindrischen Körper (27) an einer Nase (32) des zylindrischen Körpers (27) gekoppelt ist.

5. Die Vorrichtung gemäß einem oder mehreren der obigen Ansprüche, **dadurch gekennzeichnet, dass** der Heizofen (11) mit Infrarot-Heizmitteln (33) ausgestattet ist.

6. Die Vorrichtung gemäß Anspruch 1, **dadurch gekennzeichnet, dass** die Kühlungsmittel (12) aus einem Gebläse bestehen.

7. Ein Verfahren, das die Vorrichtung gemäß den Ansprüchen 1 bis 6 verwendet, **dadurch gekennzeichnet, dass** es folgende Schritte umfasst:
- Erhitzung, innerhalb des Heizofens (11), auf Bedingungen der Erweichung des Rohlings (10) bei gleichzeitiger Kühlung der Öffnung (13) des Rohlings (10) durch das Gebläse (12),
- Positionierung des erweichten Rohlings (10) so, dass er mit dem Rand (22) auf dem ringförmigen Element (21) aufliegt,
- Schließen der Form (14) durch Bewegen der zwei ersten Teile (15) zueinander und Schieben des zylindrischen Körpers (27) innerhalb der Axialbohrung (23) zu dem Sockel (19) hin, unter Penetration des Spreizkeils (26) in die elastische Dichtung (25), bis die elastische Dichtung (25) expandiert und gegen die Öffnung (13) des Rohlings (10) drückt,
- Einblasen von Luft, bis der Becherteil (34) des Rohlings (10) gegen die Wände der zwei komplementären Abdrücke (16) der beiden ersten Teile (15) der Form (14) expandiert,
- Öffnen der Form (14) und Schieben des zylindrischen Körpers (27) in die Richtung, die der vorherigen entgegengesetzt ist, unter Extraktion des Spreizkeils (26) aus der elastischen Dichtung (25), bis die Öffnung (13) vom Schub der elastischen Dichtung (25) befreit ist,
- Extraktion des Kelchs (10a) aus der Form (14).

8. Das Verfahren gemäß dem obigen Anspruch, **dadurch gekennzeichnet, dass** der Erhitzungsschritt bei gleichzeitiger Drehung des Rohlings (10), welcher den Infrarot-Heizmitteln (33) zugewandt ist, um seine eigene Symmetrieachse (35) stattfindet.

## Revendications

1. Appareil pour fabriquer des gobelets convexes réalisés en un matériau thermoplastique à partir d'une ébauche en forme de gobelet (10) obtenue par moulage d'un matériau thermoplastique, dans lequel l'appareil comprend :
- une première station, qui est constituée par un four (11) pour chauffer une ébauche (10) qui comporte une embouchure (13) avec un rebord (22), **caractérisé en ce que** ledit four (11) est muni de moyens de refroidissement (12) qui, lors de l'utilisation, sont disposés à l'embouchure (13) de ladite ébauche (10), et **en ce que** l'appareil comprend de plus :
- une deuxième station, constituée par un moule (14) qui comprend deux premières parties (15), qui comportent deux empreintes complémentaires (16) qui reproduisent la forme finale du gobelet (10a) et une troisième partie (17), constituée par un corps plein (18) supporté sur un socle (19) de ladite deuxième station, ledit corps plein (18) comportant au moins une partie (20), dirigée vers lesdites deux premières parties (15), qui est de forme tronconique, qui est formée de façon complémentaire à une embouchure desdites deux premières parties (15) et qui définit un élément annulaire (21) qui constitue une région de repos pour le rebord (22) de ladite ébauche (10), ledit corps plein (18) étant de plus muni d'un trou axial (23), qui est centré sur le moule (14) et qui s'élargit sous la forme de ladite partie tronconique (20) de façon à définir une cavité (24), un joint d'étanchéité élastique (25) étant inséré dans ladite cavité (24) et étant déformable par pénétration d'un cône d'expansion (26), qui est centré sur un corps cylindrique (27) et couplé à celui-ci, celui-ci étant perforé pour le passage d'air de soufflage, ledit corps cylindrique (27) étant inséré dans ledit trou axial (23) et étant relié à des moyens mécaniques pour un mouvement de translation.

2. Appareil selon la revendication 1, **caractérisé en ce que** ledit joint d'étanchéité élastique (25) est verrouillé par un anneau (28) qui est fixé sur les parois dudit trou axial (23), ledit anneau (28) comportant un rebord périphérique (29) qui ferme comme un étau une partie circulaire (30) dudit joint d'étanchéité élastique (25) contre le fond de ladite cavité (24)

3. Appareil selon l'une ou plusieurs des revendications précédentes, **caractérisé en ce que** lesdits moyens de mouvement de translation sont associés audit corps cylindrique (27) par un raccord qui est couplé à une tige (31) dudit corps cylindrique (27).

4. Appareil selon l'une ou plusieurs des revendications précédentes, **caractérisé en ce que** ledit cône d'expansion (26) est couplé audit corps cylindrique (27) au niveau d'une patte (32) dudit corps cylindrique (27).

5. Appareil selon l'une ou plusieurs des revendications précédentes, **caractérisé en ce que** ledit four chauffant (11) est muni de moyens de chauffage à infrarouges (33).

6. Appareil selon la revendication 1, **caractérisé en ce que** lesdits moyens de refroidissement (12) sont constitués par une soufflante d'air.

7. Procédé qui utilise l'appareil selon les revendications 1 à 6, **caractérisé en ce qu'**il comprend les étapes suivantes :
- le chauffage à l'intérieur dudit four chauffant (11), à des conditions de ramollissement de ladite ébauche (10), avec un refroidissement simultané de ladite embouchure (13) de ladite ébauche (10) par ladite soufflante (12),
- le positionnement de ladite ébauche ramollie (10) de telle sorte qu'elle repose avec ledit rebord (22) sur ledit élément annulaire (21),
- la fermeture dudit moule (14) par rapprochement mutuel desdites deux premières parties (15) et coulissement dudit corps cylindrique (27) à l'intérieur dudit trou axial (23) vers ledit socle (19), avec une pénétration dudit cône d'expansion (26) dans ledit joint d'étanchéité élastique (25) jusqu'à ce que ledit joint d'étanchéité élastique (25) subisse une expansion et appuie contre ladite embouchure (13) de ladite ébauche (10),
- l'injection d'air jusqu'à ce que le bol (34) de ladite ébauche (10) subisse une expansion sur les parois desdites deux empreintes complémentaires (16) desdites deux premières parties (15) dudit moule (14),
- l'ouverture dudit moule (14) et le coulissement dudit corps cylindrique (27) dans la direction opposée à la direction précédente, avec l'extraction dudit cône d'expansion (26) à partir dudit joint d'étanchéité élastique (25) jusqu'à ce que ladite embouchure (23) soit libérée de la poussée dudit joint d'étanchéité élastique (25),
- l'extraction dudit gobelet (10a) à partir dudit moule (14).

8. Procédé selon la revendication précédente, **caractérisé en ce que** ladite étape de chauffage se produit avec une rotation simultanée de ladite ébauche (10), qui fait face auxdits moyens de chauffage à infrarouges (33), autour de son propre axe de symétrie (35).
